# EUROPEAN PATENT APPLICATION

(11) **EP 4 610 823 A1**
(43) Date of publication of application: **03.09.2025**
(21) Application number: 24159853.1
(22) Date of filing: 27.02.2024
(51) Int. Cl.: G06F 9/48

(54) **METHODS AND SYSTEMS FOR EXECUTING COMPUTATIONAL WORK IN AN AUTOMATED DRIVING SYSTEM**

(71) Applicant: Zenseact AB, 417 56 Göteborg (SE)
(72) Inventor: BATKOVIC, Ivo, 415 26 Göteborg (SE); JOHANNESSON MÅRDH, Lars, 423 51 Torslanda (SE); GUPTA, Ankit, 412 75 Göteborg (SE); JEGERÅS, Sebastian, 415 71 Göteborg (SE)
(74) Representative: Zacco Sweden AB

(57) **Abstract**

Methods for executing computational work of an Automated Driving System, ADS, of a vehicle and related aspects are disclosed. The ADS is configured to execute ADS-function algorithms at a set frequency defining a scheduling time-window for execution of one or more algorithms, and the method comprises in response to an ADS-function algorithm having a computational runtime exceeding an available computational budget of an upcoming scheduling time-window, and in response to the algorithm fulfilling one or more conditions for partitioned execution, splitting the ADS-function algorithm into a plurality of processing portions. The method further comprises executing the plurality of processing portions of the ADS-function algorithm sequentially over a corresponding plurality of scheduling time-windows.

## Description

### TECHNICAL FIELD

The herein disclosed technology relates to methods and systems for executing computational work in an automated driving system (ADS). In particular, but not exclusively the herein disclosed technology relates to methods and systems that enable addition of functionality to the software stack of an ADS while keeping a computational budget.

### BACKGROUND

Automated Driving Systems (ADS) have garnered significant attention in recent years due to their potential to revolutionize transportation by providing safer, more efficient, and convenient modes of travel. These systems rely heavily on advanced algorithms and computational processes to perceive the environment, make decisions, and execute control actions in real-time. An increasing portion of modern vehicles have advanced driver-assistance systems (ADAS) to increase vehicle safety and more generally road safety. ADAS - which for instance may be represented by adaptive cruise control (ACC), collision avoidance system, forward collision warning, etc. - are electronic systems that may aid a driver of a vehicle. Today, there is ongoing research and development within a number of technical areas associated to both the ADAS and the Autonomous Driving (AD) fields. ADAS and AD will herein be referred to under the common term Automated Driving System (ADS) corresponding to all of the different levels of automation as for example defined by the SAE J3016 levels (0 - 5) of driving automation.

One crucial aspect of ADS functionality is the ability to process vast amounts of sensor data and execute complex algorithms efficiently. These algorithms encompass various tasks such as object detection, path planning, localization, and decision-making. However, the computational resources available in the vehicle platform are often limited due to factors such as power constraints, physical space, and cost considerations.

There is therefore a need in the art for new solutions for executing computational work in an automated driving system (ADS).

### SUMMARY

The herein disclosed technology seeks to mitigate, alleviate or eliminate one or more of the above-identified deficiencies and disadvantages in the prior art to address various problems relating to computational budget restraints in Automated Driving Systems.

Various aspects and embodiments of the disclosed technology are defined below and in the accompanying independent and dependent claims.

A first aspect of the disclosed technology comprises a method for executing computational work of an Automated Driving System (ADS) of a vehicle. The ADS is configured to execute ADS-function algorithms at a set frequency defining a scheduling time-window for execution of one or more algorithms. The method comprises in response to an ADS-function algorithm having a computational runtime exceeding an available computational budget of an upcoming scheduling time-window and in response to the algorithm fulfilling one or more conditions for partitioned execution, splitting the ADS-function algorithm into a plurality of processing portions, and executing the plurality of processing portions of the ADS-function algorithm sequentially over a corresponding plurality of scheduling time-windows.

Another aspect of the disclosed technology comprises a computer program product comprising instructions which, when the program is executed by a computer, causes the computer to carry out the method according to any one of the embodiments of the first aspect disclosed herein. With this aspect of the disclosed technology, similar advantages and preferred features are present as in the other aspects.

Another aspect of the disclosed technology comprises a (non-transitory) computer-readable storage medium comprising instructions which, when executed by a computer, causes the computer to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Another aspect of the disclosed technology comprises a system for executing computational work of an Automated Driving System (ADS) of a vehicle. The system comprises control circuitry configured to execute ADS-function algorithms at a set frequency defining a scheduling time-window for execution of one or more algorithms. The system is further configured to in response to an ADS-function algorithm having a computational runtime exceeding an available computational budget of an upcoming scheduling time-window and in response to the algorithm fulfilling one or more conditions for partitioned execution, split the ADS-function algorithm into a plurality of processing portions, and execute the plurality of processing portions of the ADS-function algorithm sequentially over a corresponding plurality of scheduling time-windows. With this aspect of the disclosed technology, similar advantages and preferred features are present as in the other aspects.

Another aspect of the disclosed technology comprises a vehicle comprising a system for executing computational work of an Automated Driving System (ADS) according to any one of the embodiments disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that the design and deployment of new ADS functions or features may be less restricted by the limited computational power onboard the vehicle.

An advantage of some embodiments is that a higher degree of freedom during design of new ADS functions or features may be provided.

An advantage of some embodiments is that new functionality may be added to a current ADS platform without exceeding the computational budget of the ADS platform.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for executing computational work in an Automated Driving System (ADS) of a vehicle, in accordance with some embodiments.
Fig. 2a is a schematic illustration depicting an execution of an ADS-function algorithm with a runtime exceeding an available computational budget.
Fig. 2b is a schematic illustration depicting a partitioning of an ADS-function algorithm with a runtime exceeding an available computational budget in accordance with some embodiments.
Fig. 3 is a schematic block diagram representation of a system for executing computational work in an Automated Driving System (ADS) of a vehicle, in accordance with some embodiments.
Fig. 4 is a schematic illustration of a vehicle comprising a system for executing computational work in an Automated Driving System (ADS) of the vehicle, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

The computational budget of a vehicle platform may be understood as the maximum amount of computational resources available for executing ADS algorithms while ensuring real-time performance and reliability. Exceeding this budget can lead to delays in decision-making, compromised safety, and overall system inefficiency. Addressing the limitations in the computational budget of vehicle platforms is assumed to be important for advancing the capabilities of ADS. Optimizing algorithms and computations to operate within these constraints without sacrificing performance or reliability is a significant challenge faced by researchers and developers in the field.

Furthermore, as ADS technology continues to evolve, the demand for more sophisticated algorithms and functionalities is increasing. This poses a continual challenge to ensure that computational resources are utilized efficiently while accommodating the growing complexity of ADS algorithms. One problem with having limited computational power onboard the vehicle is that it imposes restrictions in the kind of algorithms/function that can be deployed. This may inevitably lead to that one algorithm/function has to be sacrificed or chosen over another for computational reasons. Hence, resource allocation management is important in the development and subsequent deployment of algorithms/functions for Automated Driving Systems.

In light of these challenges, some embodiments herein optimize the computations of algorithms for ADS functions within the constraints of the computational budget of the vehicle platform. Thus, some embodiments enable the development of more robust, reliable, and efficient autonomous driving systems, ultimately contributing to the widespread adoption and success of autonomous vehicles in various applications and environments. In particular for setups where the algorithms are executed on a single core processing architecture or single thread processing architecture.

Some embodiments herein propose a scheduling-like approach for executing ADS-function algorithms based on an urgency or criticality of the specific algorithm. In more detail, some embodiments propose a methodology for executing ADS-function algorithms where certain algorithms (e.g., safety-critical, high-frequency algorithms) are executed at the set frequency while other algorithms (e.g., planning functionality, low-frequency algorithms) are partitioned over several scheduling time-windows, thereby executing the follow algorithm at a lower, albeit sufficient, frequency.

The present inventors realized that some ADS-function algorithms may not require to be run at the same frequency as the set frequency of the architecture (e.g., 100 Hz) and that the output from those algorithms may still be valid over longer time horizons. In other words, some algorithms generate an output that is valid/relevant for a longer time period than the 10 millisecond (ms) scheduling time-window of the set frequency. This may for example be the case for planning functions, such as e.g., path planning or trajectory planning functions, where the output in the form of a candidate path/trajectory is valid over a longer time horizon than 10 ms. Thus, instead of updating those algorithms every 10ms, and potentially violating the computational budget, those algorithms are executed in a "pause-play" manner. In more detail, those algorithms can be split or divided into multiple parts or portions that are executed over multiple time-windows (i.e., over multiple calls). In practice, this introduces a down-sampling of the algorithm that has been split up.

Thus, assuming that the platform runs with 10 ms time-windows where the current implementation already consumes 5 ms of each time-window for some critical functionality, and a new function requires 10ms to be executed, then one would exceed the computational budget if that new function is to be executed in a single call. However, further assuming that the new function can be implemented at a lower frequency, e.g., 20 Hz, meaning that it in practice only needs to be executed in one out of every 5 scheduling time-windows, and if just applied straightforwardly/naively, it would still exceed the computational budget every 5^{th} scheduling time-window. Thus, in accordance with some embodiments herein, this function can be split into 5 portions, and solved over 5 consecutive scheduling time-windows, thereby solving the algorithm at the required frequency (20 Hz) without exceeding the computational budget.

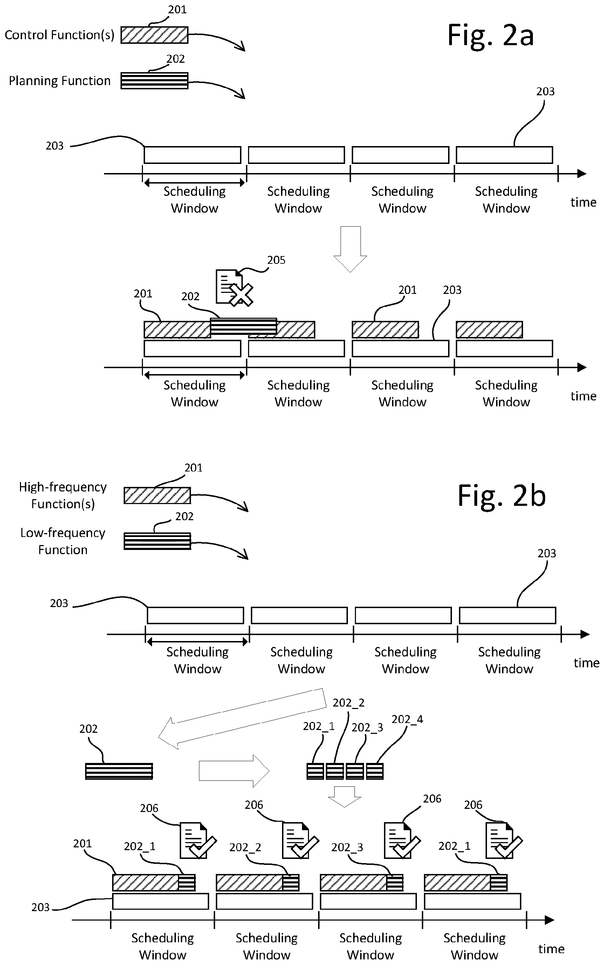

The herein proposed methodology is schematically depicted in Fig. 2b, which schematically illustrates a partitioning of an ADS-function algorithm 202 with a runtime exceeding an available computational budget in accordance with some embodiments. In more detail, Fig. 2a illustrates a scenario where a portion of the computational budget 203 for each individual scheduling time-window is allocated to control functions 201 of the ADS. Here it is assumed that the control functions 201 have to be executed at the set frequency, and therefore have to be allocated a portion of the computational budget at every time window. We can for example assume that the computational budget 203, i.e., the "length" of the scheduling time-window is 10 ms, that the computational runtime of the control function 202 is 8 ms, and the computational runtime of the planning function is 8 ms in the depicted example of Figs. 2a and 2b. Thus, in the scenario depicted in Fig. 2a, where the execution of the planning function is just applied naively in response to a call for execution, the computational budget 203 is exceeded, as indicated by the symbol 205.

However, in Fig. 2b, it is realized that the planning function 202 can be executed at a lower frequency, and therefore split into several processing portions 202_1, 202_2, 202_3, 202_4 that are executed sequentially. Thus, instead of applying the planning function 202 naively in the existing processing platform, as in Fig. 2, one splits the planning function 202 into several processing portions, 4 in the depicted example, and then executes the 4 processing portions over 4 consecutive scheduling time-windows. In other words, the plurality of processing portions, 4 in number, are executed over a corresponding plurality, 4 in number, of consecutive time-windows. Thereby, the computational budget 203 is kept, and all functions are executed in an appropriate manner.

### Definitions

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" is used herein as an umbrella term encompassing both ADAS and AD.

The term "ADS-function algorithm" may be understood as specific algorithm or set of algorithms designed to perform a particular function within the ADS. ADS-function algorithms enable various functionalities such as perception, decision-making, and control. These algorithms typically process sensor data from various sources such as cameras, lidar, radar, and other sensors to interpret the surrounding environment, detect objects, recognize road signs and markings, predict trajectories of other road users, and make decisions about the vehicle's actions. Examples of ADS-function algorithms include:
- Object detection and classification algorithms that analyse sensor data to identify and classify objects such as vehicles, pedestrians, cyclists, and obstacles in the vehicle's vicinity.
- Planning algorithms, such as path planning or trajectory planning algorithms that determine the optimal path or trajectory for the vehicle to follow based on its current position, destination, and surrounding environment while considering factors such as traffic rules, road conditions, and dynamic obstacles.
- Decision-making algorithms that evaluate possible actions and make decisions about how the vehicle should navigate through its environment, including actions such as accelerating, braking, changing lanes, and avoiding collisions.
- Control algorithms that translate the output of decision-making algorithms into control commands for the vehicle's actuators, such as steering, throttle, and brakes, to execute the planned trajectory safely and efficiently.

As mentioned, the term "computational budget" may be understood as the maximum amount of computational resources available for executing ADS algorithms while ensuring real-time performance and reliability. In more detail, in the context of a processing platform for a vehicle, a computational budget may refer to the allocated resources, typically in terms of processing power, memory, and energy consumption, that are available for executing various computational tasks and algorithms within the vehicle's systems. This budget is determined based on factors such as the specific capabilities of the processing hardware, the requirements of the various software applications and algorithms running on the platform, and constraints such as size, weight, and power limitations of the vehicle itself. For example, in an Automated Driving System (ADS), the computational budget might dictate how much processing power can be devoted to tasks such as sensor data processing, decision-making algorithms, and control systems, while still leaving sufficient resources for other critical functions and ensuring overall system performance and safety.

The term "scheduling time-window" may be understood as a designated period of time during which certain computational tasks or processes are scheduled to be executed within the available computational resources. When managing computational budgets in vehicles, especially in ADS-equipped vehicles, there are often multiple tasks competing for limited resources such as processing power, memory, and energy. Scheduling time-windows help in efficiently allocating these resources among different tasks based on their priorities, deadlines, and computational requirements. For example, for an ADS, sensor data processing, object detection, path planning, and control algorithms are tasks that may need to be executed within specific time constraints to ensure safe and reliable operation. By allocating slots within scheduling time-windows for each of these tasks, the vehicle's computing platform can prioritize and allocate resources accordingly, ensuring that tasks are completed within their deadlines while maximizing overall system performance. For example, an ADS processing platform may be configured to run at a set frequency of 100 Hz, which would result in a scheduling time-window of 10 milliseconds. In other words, the processing platform has a maximum computational budget of 10 milliseconds at each iteration.

As used herein, the term "if" may be construed to mean "when or "upon" or "in response to" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context. Accordingly, the phrase "if X equals Y" may be construed as "when X equals Y", "when it is determined that X equals Y", "in response to X being equal to Y", or "in response to detecting/determining that X equals Y" depending on the context.

In the present context, a "sensor" or "sensor device" refers to a specialized component or system that is designed to capture and gather information from the vehicle's surroundings. These sensors play a crucial role in enabling the ADS to perceive and understand their environment, make informed decisions, and navigate safely. Sensor devices are typically integrated into the autonomous vehicle's hardware and software systems to provide real-time data for various tasks such as obstacle detection, localization, road model estimation, and object recognition. Common types of sensor devices used in autonomous driving include LiDAR (Light Detection and Ranging), Radar, Cameras, and Ultrasonic sensors. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

### Example Embodiments

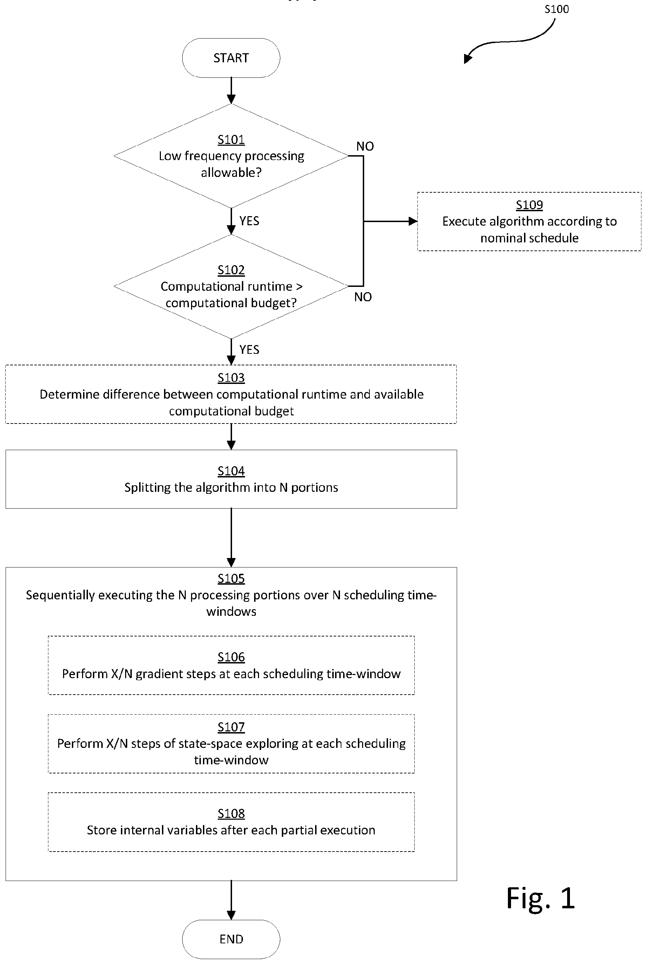

Fig. 1 is a schematic flowchart representation of a method S100 for executing computational work in an Automated Driving System (ADS) of a vehicle. In more detail, the ADS is configured to execute ADS-function algorithms at a set frequency defining a scheduling time-window for execution of one or more algorithms. The method S100 is preferably a computer-implemented method S100, suitable to be performed by a processing system of the ADS-equipped vehicle. The processing system may for example comprise one or more processors and one or more memories coupled to the one or more processors, wherein the one or more memories store one or more programs that perform the steps, services and functions of the method S100 disclosed herein when executed by the one or more processors.

The method S100 comprises in response to an ADS-function algorithm having a computational runtime exceeding an available computational budget of an upcoming scheduling time-window, and in response to the algorithm fulfilling one or more conditions for partitioned execution, splitting S104 the ADS-function algorithm into a plurality of processing portions. The method S100 further comprises executing S105 the plurality of processing portions of the ADS-function algorithm sequentially over a corresponding plurality of scheduling time-windows.

Accordingly, the method S100 may comprise checking S101 if an ADS-function algorithm fulfils one or more conditions for partitioned execution. The one or more conditions for partitioned execution may for example comprise a frequency requirement defining that the ADS-function algorithm is allowed to be executed at a lower frequency than the set frequency. In some embodiments, the frequency requirement defining that the ADS-function algorithm is allowed or configured to be executed at a fraction of the set frequency (e.g., half the set frequency, a third of the set frequency, a fourth of the set frequency, a fifth of the set frequency, and so forth). For example, if the set frequency is 100 Hz, the frequency requirement may be that the ADS-function is allowed or configured to be executed at 50 Hz, 33 Hz, 25 Hz, 20 Hz, and so forth. When it is stated that an algorithm is to be executed at a frequency of Y Hz, it is to be construed as that the result or output from the executed algorithm is required to be generated or updated every 1/Y seconds. Thus, for an algorithm that is allowed or configured to be executed at a frequency of 20 Hz, it would mean that the result or output from the executed algorithm is required to be generated or updated every 50 ms. Other conditions for partitioned may include a criticality level of the algorithm (e.g., safety-critical or not safety-critical, a classification of the algorithm (e.g., safety, planning, decision, control, etc.), and/or a priority of the algorithm (e.g., high, medium, low).

In some embodiments, the method S100 may comprise transmitting one or more signals to a control system of the vehicle based on the execution of the plurality of processing portions. For example, depending on the type of ADS-function algorithm being executed, the control circuitry 11 may transmit signals to a manoeuvring system 328 of the vehicle in order to control one or more actuators of the vehicle.

Further, the method S100 may comprise checking S102 if the computational runtime of the ADS-function algorithm exceeds the available computational budget of an upcoming or dedicated/allocated scheduling time-window. For example, if the computational budget is 4 ms, and the computational runtime of the ADS function is 8 ms, then the computational runtime exceeds the budget. However, if the computational would have been 2 ms, then it would not have exceeded the computational budget, and no partitioning is necessary.

If the result is "no" in either one of the above cases (ADS-function algorithm fulfilling one or more conditions for partitioned execution or the computational runtime of the ADS-function algorithm exceeds the available computational budget), the ADS-function algorithm is executed S109 according to the nominal schedule. In other words, if the ADS-function algorithm does not fulfil one or more conditions for partitioned execution or the computational runtime of the ADS-function algorithm does not exceed the available computational budget of an upcoming or dedicated/allocated scheduling time-window, the ADS function algorithm is executed in the upcoming or dedicated/allocated scheduling time-window. As readily understood by the skilled reader, the two checks S101 and S102 may be executed in a different order than depicted in Fig. 1, or even in parallel depending on the specific implementation.

Further, in some embodiments, the method S100 comprises determining S103 a difference between the computational runtime of the ADS-function algorithm and the available computational budget of one or more upcoming scheduling time-windows. Thus, in some embodiments, the splitting S104 of the ADS-function algorithm is based on the determined difference. In more detail, if for example, the computational runtime of the ADS-function algorithm is 8 ms, while the available computational runtime is 4 ms for the upcoming scheduling time-windows. Thus, the ADS-function algorithm may be split into 2 processing portions of 4ms each, or 4 processing portions of 2 ms each, or even 8 processing portions of 1ms each depending on the particular situation. Splitting the ADS-function algorithm into 2 processing portions would max-out the computational budget for the next two scheduling time-windows, so in order to ensure that there is a buffer, one may consider splitting the ADS-function algorithm into 4 or 8 processing portions. However, such decisions may be influenced by the frequency requirements of that particular ADS-function algorithm, as well as if the "scheduler" or "scheduling unit" intends to process other algorithms in the upcoming scheduling time-windows. Thus, the splitting S103 of the ADS-function algorithm may be performed in dependence of a processing schedule of other algorithms to be executed.

In some embodiments, the ADS-function algorithm is an ADS-function algorithm of a planning feature of the ADS. A planning feature (may also be referred to as planning function) of an ADS may be understood as the component or module responsible for determining the optimal trajectory or course of action for the vehicle to follow in order to safely navigate its environment and reach its destination. This involves making decisions about speed, lane changes, merging, overtaking, turning, and other manoeuvres based on various factors such as traffic conditions, road regulations, and potential obstacles. The algorithms executed for the planning feature may involve complex decision-making processes that integrate information from various sensors (such as cameras, LiDAR, radar), high-definition maps, vehicle dynamics, and environmental models. These algorithms may employ techniques from fields such as artificial intelligence, machine learning, optimization, and control theory to generate safe and efficient paths for the vehicle to follow. Some examples of a planning feature include path planning, trajectory planning, motion planning, or behaviour planning.

Further, in some embodiments, the ADS is configured to execute the ADS-function algorithms on a single core processing architecture or single thread processing architecture. Both single-core processing and single-thread processing architectures involve the use of a single CPU core, they differ in terms of how they manage task execution and parallelism. Single-core architectures can achieve some level of parallelism through thread-level scheduling, whereas single-thread architectures execute tasks strictly sequentially. A single-core processing architecture may be understood as a computer where all computational tasks are handled by a single central processing unit (CPU) within the computer. In this architecture, there is only one physical processor unit responsible for executing instructions, processing data, and managing system resources. The CPU is the primary component responsible for executing instructions and performing calculations. In a single-core architecture, there is only one CPU unit, which means it handles all computing tasks for the vehicle. Accordingly, the tasks or features of the ADS, such as e.g., tasks related to perception (sensor data processing), decision-making, and control are executed sequentially by the single CPU. This means that tasks are processed one after the other in a linear fashion. The single CPU manages system resources such as memory, input/output operations, and communication with other vehicle subsystems. It allocates resources to different tasks based on their priority and requirements (i.e., scheduling). A single-core processing architecture and a single-thread processing architecture have similarities in that they both involve the use of a single central processing unit (CPU) to handle computational tasks. However, in a single-core processing architecture the CPU can execute multiple threads simultaneously through time multiplexing or time-sharing techniques. This means that while there is only one physical CPU core, it can switch between executing different threads rapidly, giving the appearance of parallelism. In a single-thread architecture, the CPU can only execute one thread at a time. It cannot switch between threads in parallel, and each thread must wait its turn to be executed by the CPU.

In some embodiments, the ADS-function algorithms are designed or adapted for a specific processing architecture. Thus, the ADS-function algorithms may be designed or adapted for a single-thread or single-core architecture. The ADS may in however run on several different types of processing architectures, but as mentioned, some features or functions may be designed or adapted for a specific processing architecture.

Moreover, in some embodiments, the ADS is configured to execute a first set of ADS-function algorithms at the set frequency and a second set of ADS-function algorithms at a lower frequency than the set frequency, wherein the ADS-function algorithm is comprised in the second set of ADS-function algorithms. In other words, the splitting S104 is only performed on ADS-function algorithms comprised in the second set of ADS-function algorithms. Thus, the second set of ADS-function algorithms are algorithms that are considered to fulfil the one or more conditions for partitioned execution. The decision of whether or not an ADS-function algorithm belongs to the first set or second set (i.e., high-frequency or low-frequency algorithms) is generally defined at design-time based on safety requirements and/or comfort requirements. For example, ADS-function algorithms associated with lateral motion control of the vehicle generally require high-frequency execution as it may impair safety and/or comfort if such functions are executed at a low frequency. Thus, ADS-function algorithms associated with lateral motion control of the vehicle would be comprised by the first set. Other examples of features or functions comprised by the first set may include Emergency Brake Assist (EBA), Collision avoidance, and in general any feature or function that controls an actuator of the vehicle where the response is immediate or fast. However, ADS-function algorithms associated with longitudinal motion control typically would be allowed to be executed at a lower frequency without violating any safety or comfort requirements as those algorithms are less reactive.

In some embodiments, the ADS-function algorithm is an optimization-based algorithm, and executing S105 the plurality of processing portions comprises performing S106 X/N gradient steps at each scheduling time-window out of N consecutive scheduling time-windows. Here, X is an integer greater than or equal to 2 defining a number of steps required to solve the algorithm, N is an integer greater than or equal to 2 defining a number of processing portions that the ADS-function algorithm has been split into, and N is selected S104 such at the quotient X/N is an integer value. In other words, while X may be given by the specific algorithm and therefore fixed, N is configurable and accordingly selected S104 such that the quotient X/N does not result in a fractional value, i.e., it has to be an integer value. The solution to an optimization-based algorithm is typically obtained by updating the solution in the direction of a gradient. Thus, instead of performing X gradient steps in a single scheduling time-window (which may exceed the computational budget), one performs S106 X/N gradient steps at each scheduling time-window, thereby reducing the computational load, caused by the execution of the algorithm, on each individual scheduling time-window.

In some embodiments, the ADS-function algorithm is a graph-based algorithm, and executing S105 the plurality of processing portions comprises performing S107 X/N steps of state-space exploring at each scheduling time-window out of N consecutive scheduling time-windows. Here, X is an integer greater than or equal to 2 defining a number of steps required to reach a goal-state in the state-space, N is an integer greater than or equal to 2 defining a number of processing portions that the ADS-function algorithm has been split into, and N is selected such at the quotient X/N is an integer value. The solution to a graph-based algorithm is typically obtained by randomly exploring a state-space and connecting nodes and edges until a goal state has been reached.

Thus, instead of performing X steps of state-space exploring in a single scheduling time-window (which may exceed the computational budget), one performs S107 X/N steps of state-space exploring at each scheduling time-window, thereby reducing the computational load, caused by the execution of the algorithm, on each individual scheduling time-window.

In some cases, the value X may be unknown, and one may instead perform a maximum number of gradient steps or steps of state-space exploring that the computational budget allows for, during an unknown number of consecutive scheduling time-windows. For example, if one knows that the computational budget is 4 ms for all upcoming scheduling time-windows, and each gradient step or step of state-space exploring has a computational runtime of 1ms, one may perform 1 to 4 steps in each scheduling time-window without exceeding the computational budget. Naturally, the value of X, while unknown, may be capped so that the algorithm isn't allowed to continue endlessly.

Further, in some embodiments, in response to the ADS-function algorithm having a computational runtime exceeding an available computational budget of an upcoming scheduling time-window, and in response to the algorithm fulfilling one or more conditions for partitioned execution, the method S100 comprises storing S108 a set of internal variables of the ADS-function algorithm after execution of a processing portion. Moreover, the executing S105 the plurality of processing portions may comprise using the stored S108 set of internal variables of the ADS function algorithm from an executed processing portion of a preceding scheduling time-window for execution of a processing portion at a current scheduling time-window. Accordingly, when the ADS-function algorithm is executed or split-up between multiple calls (i.e., between multiple scheduling time-windows), one may desire to store/save the internal variables used by the algorithm in between function calls.

Accordingly, some embodiments herein provide a solution to the technical problem of releasing new and computationally intensive software features for Automated Driving System on a computational platform with limited computational resources. In particular, some embodiments solve this problem by partitioning the algorithms to be executed over multiple scheduling time-windows, thereby effectively reducing the runtime of the algorithm so to conform to the computational budget restraints.

Moreover, some embodiments herein allow for an increased degree of freedom when designing ADS features or functions as the platform can run on a high frequency in general (as required for some functions) while still being able to execute "low-frequency" functions as these can be partitioned. Thus, one is not limited to executing all functions and features at the set frequency.

Executable instructions for performing these functions are, optionally, included in a non-transitory computer-readable storage medium or other computer program product configured for execution by one or more processors.

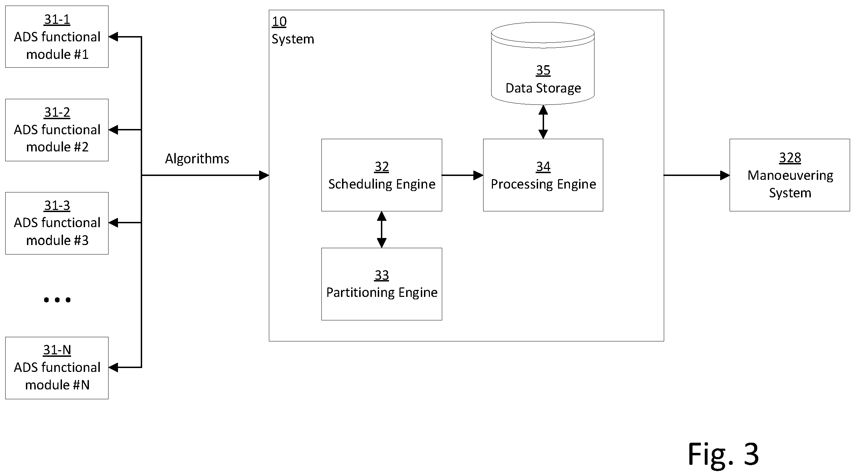

Fig. 3 is a schematic block diagram representation of a system 10 for executing computational work in an ADS of a vehicle in accordance with some embodiments. The system 10 comprises control circuitry (e.g. one or more processors) configured to perform the functions of the method S100 disclosed herein, where the functions may be included in a non-transitory computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein. However, in order to better elucidate the herein disclosed embodiments, the control circuitry is represented as various "engines" in Fig. 3, each of them linked to one or more specific functions of the control circuitry.

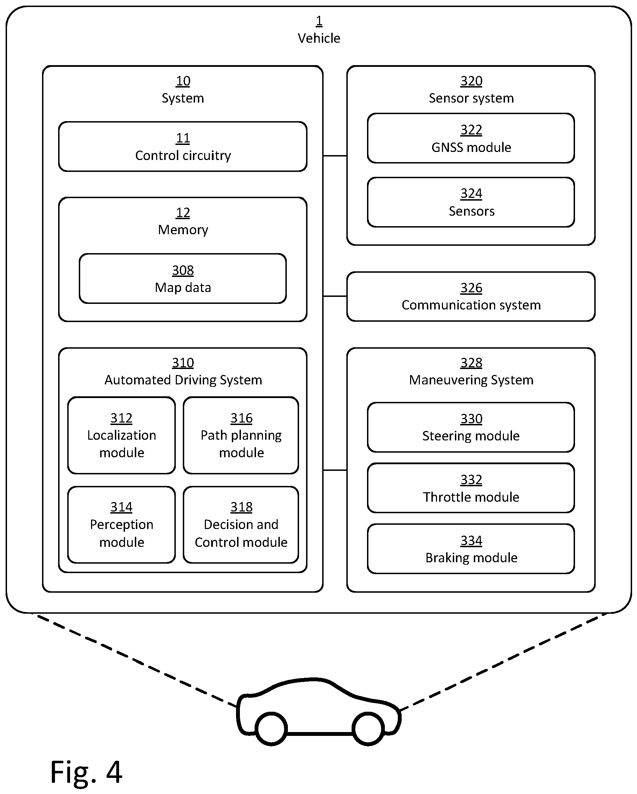

The system comprises control circuitry (see e.g., Fig. 4, reference number 11) that is configured to execute ADS-function algorithms at a set frequency defining a scheduling time-window for execution of one or more algorithms. The system 10 may be a module, feature, or otherwise integrated into the ADS. The control circuitry is further configured to, in response to an ADS-function algorithm having a computational runtime exceeding an available computational budget of an upcoming scheduling time-window, and in response to the algorithm fulfilling one or more conditions for partitioned execution, split the ADS-function algorithm into a plurality of processing portions and execute the plurality of processing portions of the ADS-function algorithm sequentially over a corresponding plurality of scheduling time-windows.

Accordingly, as depicted in Fig. 3, the system 10 receives calls or generates calls for processing/solving one or more ADS-function algorithms from/to various functional modules 31-1, 31-2, 31-3 ... 31-N of the ADS. The calls to solve the algorithms may be construed as requests to solve the algorithms in order to perform specific tasks or provide certain information. The scheduling engine 32 or ("scheduler") is configured to allocate resources to process and solve the algorithms. However, in response to an ADS-function algorithm having a computational runtime exceeding an available computational budget of an upcoming scheduling time-window, and in response to the algorithm fulfilling one or more conditions for partitioned execution, the scheduling engine may invoke a partitioning engine 33 that is configured to split the ADS-function algorithm into a plurality of processing portions. Thereby, enabling for the ADS-function algorithm to be solved over multiple calls instead of a single call to the processing engine 34, which would exceed the computational budget.

Further, in some embodiments, the control circuitry 11 is configured to transmit one or more signals to a control system of the vehicle based on the execution of the plurality of processing portions. For example, depending on the type of ADS-function algorithm being executed, the control circuitry 11 may transmit signals to a manoeuvring system 328 of the vehicle in order to control one or more actuators of the vehicle.

In some embodiments, the control circuitry 11 is configured to determine a difference between the computational runtime of the ADS-function algorithm and the available computational budget of one or more upcoming scheduling time-windows. Moreover, the splitting of the ADS-function algorithm may be based on the determined difference between the computational runtime of the ADS-function algorithm and the available computational budget of one or more upcoming scheduling time-windows. Furthermore, in some embodiments, the system 10 is configured to execute the ADS-function algorithms on a single core processing architecture or single thread processing architecture.

Moreover, in some embodiments, the ADS-function algorithm is an optimization-based algorithm, and the control circuitry may be configured to execute the plurality of processing portions by performing X/N gradient steps at each scheduling time-window out of N consecutive scheduling time-windows. Here, X is an integer greater than or equal to or equal to 2 defining a number of steps required to solve the algorithm, N is an integer greater than or equal to or equal to 2 defining a number of processing portions that the ADS-function algorithm has been split into, and N is selected such at the quotient X/N is an integer value.

However, in some embodiments, the ADS-function algorithm is a graph-based algorithm, and the control circuitry may be configured to execute the plurality of processing portions by performing X/N steps of state-space exploring at each scheduling time-window out of N consecutive scheduling time-windows. Here, X is an integer greater than or equal to or equal to 2 defining a number of steps required to reach a goal-state in the state-space, N is an integer greater than or equal to or equal to 2 defining a number of processing portions that the ADS-function algorithm has been split into, and N is selected such at the quotient X/N is an integer value.

Still further, in some embodiments, the control circuitry is configured to store (e.g., in a suitable data storage or data buffer 35) a set of internal variables of the ADS-function algorithm after execution of a processing portion, in response to the ADS-function algorithm having a computational runtime exceeding an available computational budget of an upcoming scheduling time-window, and in response to the algorithm fulfilling one or more conditions for partitioned execution. Moreover, the control circuitry may be configured to execute the plurality of processing portions by using the stored set of internal variables of the ADS function algorithm from an executed processing portion of a preceding scheduling time-window for execution of a processing portion at a current scheduling time-window.

Fig. 4 is a schematic illustration of an ADS-equipped vehicle 1 comprising such a system 10. As used herein, a "vehicle" is any form of motorized transport. For example, the vehicle 1 may be any road vehicle such as a car (as illustrated herein), a motorcycle, a (cargo) truck, a bus, etc.

The system 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the system 10 may form a part of the ADS 310, i.e. the system 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 4. Moreover, the vehicle 1 may comprise further elements than those shown in Fig. 4. While the various elements is herein shown as located inside the vehicle 1, one or more of the elements can be located externally to the vehicle 1. For example, the map data may be stored in a remote server and accessed by the various components of the vehicle 1 via the communication system 326.

Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 4 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

Accordingly, the vehicle 1 comprises a system 10 for executing computational work of an (ADS) 310 of a vehicle 1, where the system 10 comprising control circuitry 11 configured to execute ADS-function algorithms at a set frequency defining a scheduling time-window for execution of one or more algorithms. The control circuitry 11 is further configured to in response to an ADS-function algorithm having a computational runtime exceeding an available computational budget of an upcoming scheduling time-window, and in response to the algorithm fulfilling one or more conditions for partitioned execution, split the ADS-function algorithm into a plurality of processing portions and execute the plurality of processing portions of the ADS-function algorithm sequentially over a corresponding plurality of scheduling time-windows.

The present invention has been presented above with reference to specific embodiments. However, other embodiments than the above described are possible and within the scope of the invention. Different method steps than those described above, performing the method by hardware or software, may be provided within the scope of the invention. Thus, according to some embodiments, there is provided a non-transitory computer-readable storage medium storing one or more programs configured to be executed by one or more processors of a computer, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of checking S102 whether an ADS-function algorithm has a computational runtime exceeding an available computational budget and checking S101 whether an ADS-function algorithm fulfils one or more conditions for partitioned execution may be interchanged based on a specific realization. Such variation will depend on the software and hardware systems chosen and on designer choice. All such variations are within the scope of the invention. Likewise, software implementations could be accomplished with standard programming techniques with rule-based logic and other logic to accomplish the various execution steps, determining steps, splitting steps, checking steps, storing steps, using steps and performing steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A method (S100) for executing computational work of an Automated Driving System, ADS, of a vehicle, wherein the ADS is configured to execute ADS-function algorithms at a set frequency defining a scheduling time-window for execution of one or more algorithms, the method comprising:
in response to an ADS-function algorithm having a computational runtime exceeding an available computational budget of an upcoming scheduling time-window, and in response to the ADS-function algorithm fulfilling one or more conditions for partitioned execution:
splitting (S104) the ADS-function algorithm into a plurality of processing portions;
executing (S105) the plurality of processing portions of the ADS-function algorithm sequentially over a corresponding plurality of scheduling time-windows.

2. The method (S100) according to claim 1, the method further comprising:
determining (S103) a difference between the computational runtime of the ADS-function algorithm and the available computational budget of one or more upcoming scheduling time-windows; and
wherein the splitting (S104) of the ADS-function algorithm is based on the determined difference.

3. The method (S100) according to claim 1 or 2, wherein the one or more conditions for partitioned execution comprises a frequency requirement defining that the ADS-function algorithm is allowed to be executed at a lower frequency than the set frequency.

4. The method (S100) according to any one of claims 1-3, wherein the ADS-function algorithm is an ADS-function algorithm of a planning feature of the ADS.

5. The method (S100) according to any one of claims 1-4, wherein the ADS is configured to execute the ADS-function algorithms on a single core processing architecture or single thread processing architecture.

6. The method (S100) according to any one of claims 1-5, wherein the ADS is configured to execute a first set of ADS-function algorithms at the set frequency and a second set of ADS-function algorithms at a lower frequency than the set frequency, wherein the ADS-function algorithm is comprised in the second set of ADS-function algorithms.

7. The method (S100) according to any one of claims 1-6, wherein the ADS-function algorithm is an optimization-based algorithm, and wherein the executing (S105) the plurality of processing portions comprises:
performing (S106) X/N gradient steps at each scheduling time-window out of N consecutive scheduling time-windows, wherein X is an integer greater than or equal to 2 defining a number of steps required to solve the algorithm and N is an integer greater than or equal to 2 defining a number of processing portions that the ADS-function algorithm has been split into, and wherein N is selected such at the quotient X/N is an integer value.

8. The method (S100) according to any one of claims 1-6, wherein the ADS-function algorithm is a graph-based algorithm, and wherein the executing (S105) the plurality of processing portions comprises:
performing (S107) X/N steps of state-space exploring at each scheduling time-window out of N consecutive scheduling time-windows, wherein X is an integer greater than or equal to 2 defining a number of steps required to reach a goal-state in the state-space and N is an integer greater than or equal to 2 defining a number of processing portions that the ADS-function algorithm has been split into, and wherein N is selected such at the quotient X/N is an integer value.

9. The method (S100) according to any one of claims 1-8, further comprising:
in response to the ADS-function algorithm having a computational runtime exceeding an available computational budget of an upcoming scheduling time-window, and in response to the algorithm fulfilling one or more conditions for partitioned execution:
storing (S108) a set of internal variables of the ADS-function algorithm after execution of a processing portion; and
wherein the executing (S105) the plurality of processing portions comprises:
using the stored set of internal variables of the ADS function algorithm from an executed processing portion of a preceding scheduling time-window for execution of a processing portion at a current scheduling time-window.

10. A computer program product comprising instructions which, when the program is executed by a computer, causes the computer to carry out the method (S100) according to any one of claims 1-9.

11. A computer-readable storage medium comprising instructions which, when executed by a computer, causes the computer to carry out the method (S100) according to any one of claims 1-9.

12. A system (10) for executing computational work of an Automated Driving System, ADS, of a vehicle (11), the system (10) comprising control circuitry (11) configured to:
execute ADS-function algorithms at a set frequency defining a scheduling time-window for execution of one or more algorithms;
in response to an ADS-function algorithm (202) having a computational runtime exceeding an available computational budget (203) of an upcoming scheduling time-window, and in response to the ADS-function algorithm (202) fulfilling one or more conditions for partitioned execution:
split the ADS-function algorithm (202) into a plurality of processing portions (202_1, 202_2, 202_3, 202_4);
execute the plurality of processing portions of the ADS-function algorithm (202) sequentially over a corresponding plurality of scheduling time-windows.

13. The system (10) according to claim 12, wherein the one or more conditions for partitioned execution comprises a frequency requirement defining that the ADS-function algorithm is allowed to be executed at a lower frequency than the set frequency.

14. The system (10) according to claim 12 or 13, wherein the system (10) is configured to execute the ADS-function algorithms on a single core processing architecture or single thread processing architecture.

15. A vehicle (1) comprising a system (10) according to any one of claims 12 to 14.
